# EUROPEAN PATENT SPECIFICATION

(11) **EP 1 526 600 B1**
(45) Date of publication and mention of the grant of the patent: **03.12.2008**
(21) Application number: 04256478.1
(22) Date of filing: 20.10.2004
(51) Int. Cl.: H01M 10/40, H01M 6/16

(54) **Organic electrolytic solution and lithium battery using the same**
Organische Elektrolytlösung und und diese verwendende Lithiumbatterie
Solution électrolytique organique et pile au lithium l'utilisant

(30) Priority: 24.10.2003 KR 2003074661
(43) Date of publication of application: 27.04.2005
(73) Proprietor: Samsung SDI Co., Ltd., Suwon-si, Gyeonggi-do (KR)
(72) Inventor: Kim, Ju-Yup, c/o 101-605 Hanbit Apt., Seoul (KR); Kim, Han-Soo, c/o 102-1503 Donga Apt., Seoul (KR); Park, Jin-Hwan, c/o 24-403 Namsan Town Apt., Seoul (KR); Lee, Seok-Soo, c/o 408-1106 Hwaseo Jugong Apt., Suwon-si, Gyeonggi-do (KR)
(74) Representative: Kyle, Diana

(56) References cited:
- US-A- 6 030 720
- DATABASE CA [Online] CHEMICAL ABSTRACTS SERVICE, COLUMBUS, OHIO, US; OKADA, MIKIO ET AL: "Nonaqueous-electrolyte battery containing halo-substituted benzene compound and its manufacture" retrieved from STN Database accession no. 135:95153 XP002313943 -& JP 2001 185213 A (JAPAN STORAGE BATTERY CO., LTD., JAPAN) 6 July 2001 (2001-07-06)

## Description

The present invention is related to an organic electrolytic solution and a lithium battery using the same. In particular, the present invention is related to an organic electrolytic solution capable of stabilizing the surface of lithium metal thereby improving the charge/discharge efficiency of the lithium battery.

As the demand for compact portable electronic devices increases, there is also an increasing need for high energy density batteries as power sources. In addition, there is a need to develop batteries that are more economical, safer and environmentally friendly. Lithium sulfur batteries are capable of satisfying the above requirements due to their high energy density.

Lithium sulfur batteries may be manufactured using lithium and sulfolane (S8) as the active materials. This will result in batteries having an energy density of about 3,830 mAh/g and 1,675 mAh/g, respectively, as well as batteries that are economical and environmentally friendly. However, there are several disadvantages associated with the use of these active materials in battery systems.

First, due to the low availability of sulfur as an active material in electrochemical oxidation-reduction reactions, the battery will have low capacity. In addition, due to the outflow of sulfur into the electrolyte solution during oxidation and reduction reactions, the life span of the battery will be shortened. Finally, if sulfur is used with an incompatible electrolytic solution, Li₂S will form, and the sulfur will no longer be available for electrochemical reactions.

In order to overcome these disadvantages, optimization of the electrolytic solution may be required. For example, U.S. Patent No. 6,030,720 discloses the use of R₁(CH₂CH₂O)ₙR₂, as a main solvent, where n ranges from 2 to 10 and R is an alkyl or alkoxy group, and a mixed solvent having a donor number of 15 or more as a co-solvent. In addition, a liquid electrolytic solution comprising one or more compounds, such as crown ether, cryptand, and/or a solvent having a donor number of 15 or more may also be used. In so doing, however, the liquid electrolytic solution may become catholytic following discharge, resulting in a battery having a separation distance of 400 µm or less. Furthermore, to improve the lifespan and safety of the battery, U.S. Patent No. 5,961,672 discloses a lithium metal anode covered with a polymeric film and the use of an organic electrolytic solution of 1 M LiSO₃CF₃ in a mixed solvent of 1,3-dioxolane, diglyme, sulfolane, and diethoxyethane in a ratio of 50:20:10:20.

When an anode of a lithium battery is composed of a lithium metal, the performance of the battery may deteriorate. In particular, the battery may short out due to dendrites forming on the surface of the lithium metal anode and extending into the surface of a cathode. In addition, battery capacity may decrease due to corrosion of the anode surface resulting from a reaction between the lithium metal and the electrolyte solution. In order to overcome these problems, U.S. Patent Nos. 6,017,651, 6,025,094, and 5,961,672 disclose the formation of a protective layer on the surface of the lithium metal electrode.

JP 2001 185213 discloses a battery with an organic electrolyte comprising a halogen substituted benzene ring.

To be effective, however, the protective layer must allow passage of the lithium ions and act as a barrier to prevent the electrolytic solution from contacting the lithium anode. In general, the lithium-protecting layer may be formed by the reaction of lithium and an additive within the electrolytic solution after the assembly of the battery. However, the protective layer formed by this method has several disadvantages, such as poor density. Additionally a considerable amount of electrolytic solution may permeate through pores in the protective layer and undesirably react with lithium metal. Alternatively, a lithium nitride (Li₃N) protective layer may be fabricated by exposing the surface of a lithium electrode with nitrogen plasma. However, there are several problems associated with a lithium nitride protective layer. In particular, the electrolytic solution may leak through the grain boundaries within the lithium nitride layer. Additionally, the lithium nitride layer may be susceptible to degradation and may have a low potential window (0.45V). Therefore, the lithium nitride layer is impractical to use. The present invention is directed to an organic electrolytic solution capable of stabilizing a lithium metal. Specifically, the organic electrolytic solution of the present invention comprises an additive that may be absorbed by lithium metal. Additionally, the present invention is directed to improving the charge/discharge efficiency of a lithium battery.

According to an aspect of the present invention, the organic electrolytic solution comprises a lithium salt; an organic solvent comprising polyglymes and dioxolanes in a ratio of 1:9 to 9:1 by volume and a halogenated benzene compound selected from 1-iodobenzene, 1 - chlorobenzene, 1,2-diiodobenzene, 1,3-diiodobenzene, 1,4-diiodobenzene, 1,2,3-triiodobenzene, 1,2,4-triiodobenzene, 1-iodo-2-chlorobenzene, and 1-iodo-3 chlorobenzene.

An aspect of the present invention may also provide a lithium battery comprising a cathode, an anode, a separator interposed between the cathode and the anode, and an organic electrolytic solution. The anode may be a lithium metal electrode. The organic electrolytic solution may be composed of a lithium salt and an organic solvent. The organic solvent may comprise one or more polyglymes and/or dioxolanes, and a halogenated benzene compound represented by Formula (1).
Figure 1 illustrates the principles of the present invention.
Figure 2 illustrates Li cyclic efficiency for lithium batteries with respect to iodobenzene concentration as prepared in Examples 1-4 and 16.
Figure 3 depicts Li cyclic efficiency for lithium batteries with respect to iodobenzene concentration as prepared in Examples 5-8 and 16.
Figure 4 illustrates the discharge capacity with respect to the number of charge/discharge cycles for lithium batteries as prepared in Examples 9-11.
Figure 5 illustrates the discharge capacity with respect to the number of charge/discharge cycles for the lithium sulfur batteries as prepared in Examples 12-14.
Figure 6 shows the Li cyclic efficiency for lithium batteries as prepared in Examples 1-5 and 16.
Figure 7 illustrates the discharge capacity with respect to the number of charge/discharge cycles for lithium batteries as prepared in Examples 9-12 and 17.
Figure 8A is a SEM image of the lithium metal surface following a 10-cycle charge/discharge test conducted at 1C on lithium batteries as prepared in Example 15 and 18.
Figure 8B is a SEM image of the lithium metal surface following a 10-cycle charge/discharge test conducted at 1C on lithium batteries as prepared in Example 15 and 18.
Figure 9A is a SEM image of lithium metal surfaces of the lithium batteries as prepared in Examples 15 and 18 following a 2 week period.
Figure 9B is a SEM image of lithium metal surfaces of the lithium batteries as prepared in Examples 15 and 18 following a 2 week period.

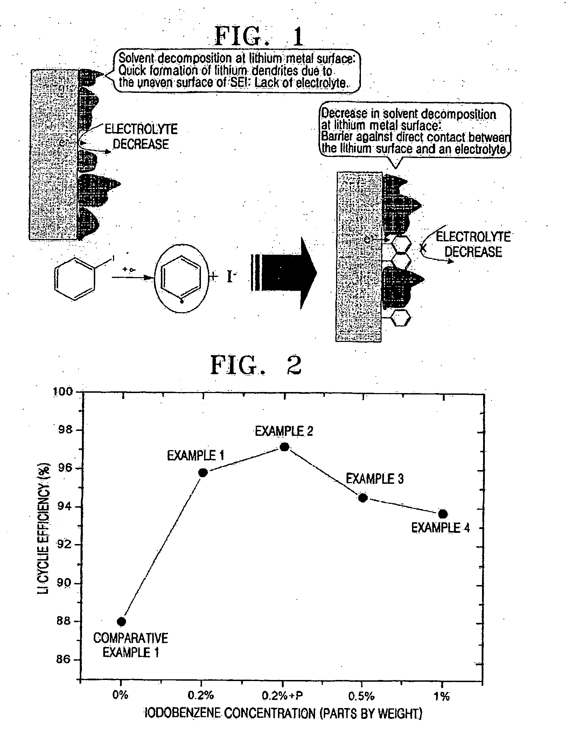

Referring to Figure 1, the halogenated benzene compound, 1-iodobenzene, added to the organic electrolytic solution separates into a benzene radical and an iodine ion (I). During charging, the benzene radical may bind to the metal lithium on the surface of the solid electrolyte interface (SEI). Accordingly, the halogenated benzene reduces the reactivity of the lithium metal surface, thereby improving the stability of SEI. In addition, since the benzene in contact with the SEI has a high polarity, it is less likely to bond with the sulfide anions in the electrolytic solution, and may allow the sulfide anions to remain stable in the electrolytic solution.

In a specific preferred embodiment, the concentration of the halogenated benzene compound of Formula (1) may be in the range of about 0.1 parts to about 1 part by weight based on 100 parts by weight of an organic solvent. If the amount of the halogenated benzene compound is less than 0.1 parts by weight, it may be easily released from lithium metal. Thus, uniform absorption to the lithium metal cannot be obtained. In the alternative, if the amount of the halogenated benzene compound is greater than 1 part by weight, the electrolytic solution may act as a resistor due to its increased viscosity, thereby decreasing the conductivity of lithium ions.

The organic solvent according an embodiment of the present invention comprises a polyglyme such as represented by Formula (2) below, and a dioxolane.

**Formula 2** R³(OCH₂CH₂)ₘOR⁴

where m may be an integer in the range of 1 to 10, and R³ and R⁴ may each independently be a substituted or unsubstituted C1-C20 alkyl group. In a further embodiment, the organic solvent may further comprise one or more compounds, such as carbonate, dimethoxyethane (DME), diethoxyethane, and/or sulfolane (SUL), for example.

The polyglyme of Formula (2) may be a compound, such as diethyleneglycol dimethylether, diethyleneglycol diethylether, triethyleneglycol dimethylether, and triethyleneglycol diethylether, for example. The dioxolane may include, but is not limited to, 1,3-dioxolane (DOX), 4,5-diethyl-dioxolane, 4,5-dimethyl-dioxolane, 4-methyl-1,3-dioxolane, and 4-ethyl-1,3-dioxolane. In a further embodiment, the carbonate may be, for example, ethylene carbonate, methylene carbonate, diethyl carbonate, dimethyl carbonate, v-butyrolacetone, propylene carbonate, methyl ethyl carbonate, and vinylene carbonate.

The organic solvent of the present invention may comprise dioxolane in the range of about 11.11-900 parts by volume and about 11.11-900 parts by volume of a compound, which may include, sulfolane, dimethoxyethane, diethoxyethane, and carbonate, based on 100 parts by volume of polyglyme. As used herein, the phrase 'parts by volume' represents the relative amount of volume, and corresponds to the phrase 'parts by weight' which represents the relative amount of weight. According to the invention, the organic solvent comprises the polyglyme and the dioxolane in a ratio in the range of 1:9 to 9:1 based on volume. If the ratio is outside of this range, the discharge capacity and charge/discharge cycle life of the battery may degrade.

According to an embodiment of the present invention, the organic electrolytic solution may be used in common lithium batteries. In particular, a lithium battery using the electrolytic solution comprising the halogenated benzene compound of by Formula (1) may increase the stability of a lithium metal surface. The lithium battery may be a lithium first battery or a lithium secondary battery.

In a particular embodiment, any lithium salt that is commonly used for lithium batteries may be used in the organic electrolytic. The lithium salt may include, for example, lithium perchlorate (LiClO₄), lithium tetrafluoroborate (LiBF₄), lithium hexafluorophosphate (LiPF₆), lithium trifluoromethansulfonate (LiCF₃SO₃), and lithium bistrifluoromethansulfonylamide (LiN(CF₃SO₂)₂). The concentration of the lithium salt may preferably be in a range of 0,4M to 1.5M. If the concentration of the lithium salt is less than 0.4M, the ionic conductivity may be low. In contrast, if the concentration of the lithium salt exceeds 1.5M, the lithium salt may decompose.

Hereinafter, a method of manufacturing a lithium sulfur secondary battery according to an embodiment of the present invention will be described. First, a cathode and an anode may be manufactured using any method known by those skilled in the art. The cathode may be composed of one or more compounds that may include, for example, a simple substance sulfur, a catholyte in which Li₂Sn ( 1≤n≤12 ) is dissolved, organic sulfur, and (C₂Sₓ)_{y} ( 2.5 ≤ x ≤ 20 and 1 ≤ y ≤ 18). Examples of the anode may include a lithium metal electrode, a lithium metal alloy electrode, a composite electrode composed of lithium inert sulfur, and an electrode composed of a carbon-based material or a graphite-based material. Examples of the lithium metal alloy electrode may include a lithium-aluminum electrode, a lithium-magnesium electrode, and a lithium-silicon electrode, for example.

Next, a separator may be positioned between the cathode and the anode, and then the resulting structure may be wound or stacked to form an electrode assembly. The resulting electrode assembly may be sealed in a battery case. Next, an organic electrolytic solution according to an embodiment of the present invention may be injected into the battery case containing the electrode assembly, thereby completing the lithium secondary battery.

The organic electrolytic solution according to an embodiment of the present invention may be applied to lithium polymer secondary batteries, which may use a polymer electrolyte, as well as the lithium secondary battery as described above. If needed, a protective layer may be interposed between the anode and the separator to prevent the lithium from reacting with the electrolytic solution.

### EXAMPLES

To measure the charge/discharge efficiency of a lithium battery containing an organic electrolytic solution according to an embodiment of the present invention, 2016 type half coin cells were manufactured in Examples 1-13, and full lithium sulfur cells were manufactured in Examples 14 through 19.

### Specific Example 1, not forming part of the present invention:

An electrode assembly was manufactured comprising a cathode, an anode, and a polyethylene separator (Ashai Co., Tokyo, Japan) interposed between the cathode and the anode. The cathode and the anode were lithium metal electrodes. The electrode assembly was sealed in a battery case, and an organic electrolytic solution according to an embodiment of the present invention was injected to complete a lithium battery. The organic electrolytic solution contained 1M Li(SO₂CF₃)₂ as a lithium salt, a mixture of diethyleneglycol dimethylether (DGM), DME, and DOX in a ratio of 4:4:2 by volume as an organic solvent, and 0.2 parts by weight of 1-iodobenzene based on 100 parts by weight of the organic solvent.

### Specific Example 2, not forming part of the present invention:

A lithium battery was manufactured in the same manner as in Example 1, except that 0.2 parts by weight of 1-iodobenzene based on 100 parts by weight of the organic solvent, and polyvinylidenefluoride, instead of polyethylene, was used as a separator

### Specific Examples 3 and 4, not forming part of the present invention:

Lithium batteries were manufactured in the same manner as in Example 1, except that 0.5 parts by weight and 1 part by weight of 1-iodobenzene based on 100 parts by weight of the organic solvent were used for the respective lithium batteries.

### Specific Examples 5-8, not forming part of the present invention.

Lithium batteries were manufactured in the same manner as in each of Examples 1-4 except that 1-clorobenzene was used instead of 1-iodobenzene.

### Specific Example 9

A uniformly-mixed cathode active slurry was prepared by mixing in acetonitrile 80 % by weight of sulfur, 5 % by weight of carbon black (Super-P), and 15 % by weight of styrenebutadiene rubber (SBR) (Zeon Chemicals, Tokyo, Japan) having a weight average molecular weight of greater than about 600,000, and then ball milling the mixture for 6 hours at 200 rpm.

A carbon-coated aluminum (AL) substrate was coated with the cathode active slurry using a doctor blade. The cathode active slurry was coated with a loading amount of 2g/cm², assuming that the capacity of sulfur was 840 mAh/g. Next, the resultant was dried at 80°C for 24 hours. The anode was composed of a 50 µm thick lithium metal film.

An electrode assembly including the cathode, a polyethylene separator, and the anode stacked sequentially was manufactured and sealed in a battery case. An organic electrolytic solution was injected into the battery case to complete a lithium sulfur battery.

The organic electrolytic solution contained 1M Li (SO₂CF₃)₂ as a lithium salt, a mixture of DGM, DME, and DOX in a ratio of about 4:4:2 by volume as an organic solvent, and 0.2 parts by weight of 1-iodobenzene based on 100 parts by weight of the organic solvent.

### Specific Examples 10 and 11:

Lithium sulfur batteries were manufactured in the same manner as in Example 9, except that 0.5 parts by weight and 1 part by weight of 1-iodobenzene based on 100 parts by weight of the organic solvent were used for the respective lithium sulfur batteries.

### Specific Examples 12-14:

Lithium batteries were manufactured in the same manner as in each of Examples 9 through 11 except that 1-cholorobenzene was used instead of 1-iodobenzene.

### Specific Example 15, not forming part of the present invention:

A cathode and an anode, each composed of a lithium metal having a thickness of about 50µm was formed, and a polyvinyliden-fluoride film was interposed as a separator. The cathode, the anode, and the separator were sealed in a pouch, and then an organic electrolytic solution was injected into the pouch to prepare a lithium battery. The organic electrolytic solution contained 1M Li(SO₂CF₃)₂ as a lithium salt, a mixture of DGM, DME, and DOX in a ratio of 4:4:2 by volume as an organic solvent, and 0.2 parts by weight of 1-iodobenzene based on 100 parts by weight of the organic solvent

### Specific Example 16, not forming part of the present invention.

A lithium battery was manufactured in the same manner as in Example 1, except that the organic solvent included only DGM, DME, and DOX in a ratio of 4:4:2 by volume, not 1-iodobenzene.

### Specific Example 17

A lithium battery was manufactured in the same manner as in Example 9, except that the organic solvent included only DGM, DME, and DOX in a ratio of 4:4:2 by volume, not 1-iodobenzene.

### Specific Example 18, not forming part of the present invention:

A lithium battery was manufactured in the same manner as in Example 15 except that 1-iodobenzene was not included. The effect of 1-iodobenzene concentration on Li cyclic efficiency was measured using the lithium batteries manufactured in Examples 1-4 and 16. The results are shown in Figure 2. Referring to Figure 2, the Li cyclic efficiency is greatest at 0.2 parts by weight of 1-iodobenzene based on 100 parts by weight of the organic solvent.

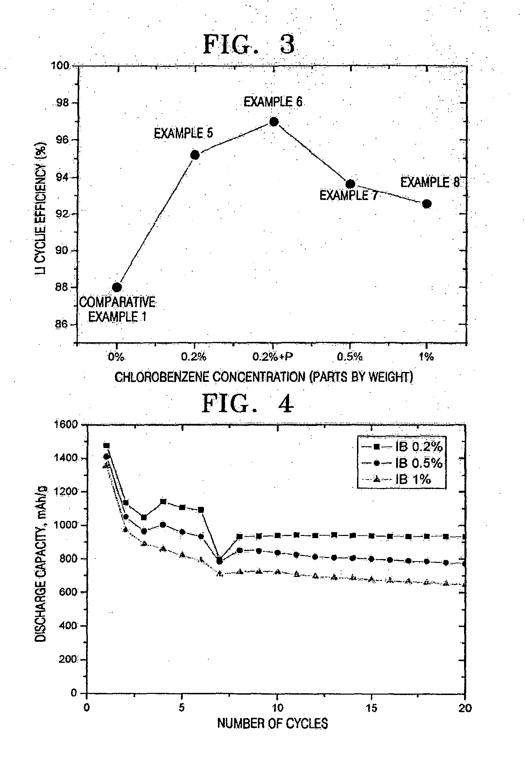

The effect of chlorobenzene concentration on the Li cyclic efficiency was measured using the lithium batteries manufactured in Examples 5-8 and 16. The results are shown in Figure 3. Referring to Figure 3, the Li cyclic efficiency was greatest at about 0.2 parts by weight of 1-chlorobenzene based on 100 parts by weight of the organic solvent when the polyvinyliden-fluoride separator was used.

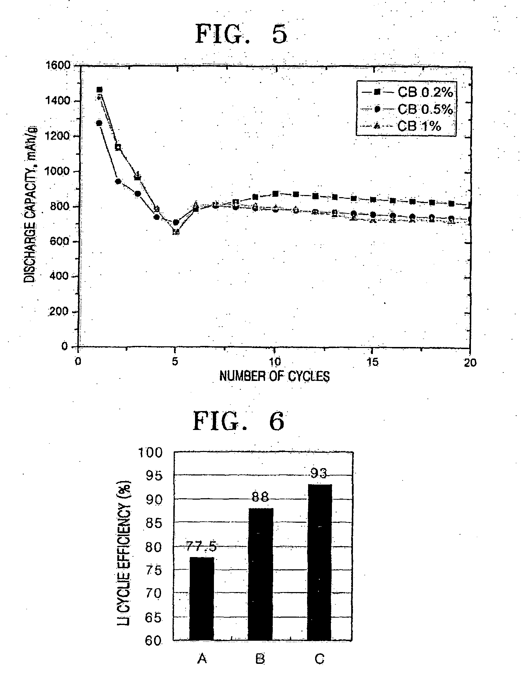

The effect of the number of cycles on discharge capacity was measured using the lithium sulfur batteries manufactured in Examples 9-11 and in Examples 12-14. The results are shown in Figures 4 and 5. As is shown in Figures 4 and 5, the cycle characteristics were greatest for the lithium sulfur batteries containing 0.2 parts by weight of 1- iodobenzene and 0.2 parts by weight of 1-chlorobenzene based on 100 parts by weight of the organic solvent.

Li cyclic efficiency was measured using lithium batteries manufactured in Examples 1, 5 and 16. The results are shown in Figure 6. Referring to Figure 6, the Li cyclic efficiency was higher for the lithium battery containing 1-iodobenzene and 1-chlorobenzene. In particular, the cyclic characteristics of the lithium battery containing 1-iodobenzene are superior to these of lithium batteries containing 1-chlorobenzene.

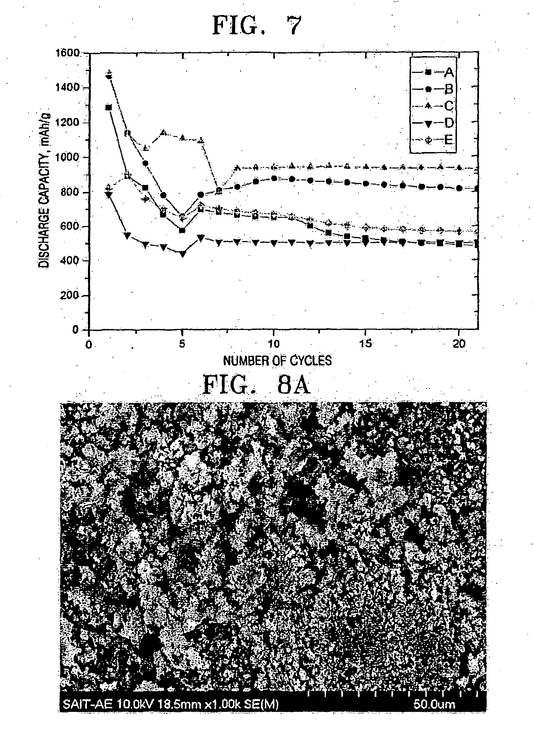

The change in discharge capacity with respect to the number of cycles for the lithium batteries manufactured in Examples 9, 12 and 17 was measured. The results are shown in Figure 7. Referring to Figure 7, A, B, and C illustrate Example 17, Example 12, and Example 9, respectively. As is shown in Figure 7, the discharge capacity was higher in the lithium sulfur batteries of Examples 9 and 12 than in the lithium sulfur battery of Examples 17. The lithium battery containing 1-iodobenzene has a higher discharge capacity than the lithium battery containing 1-chlorobenzene.

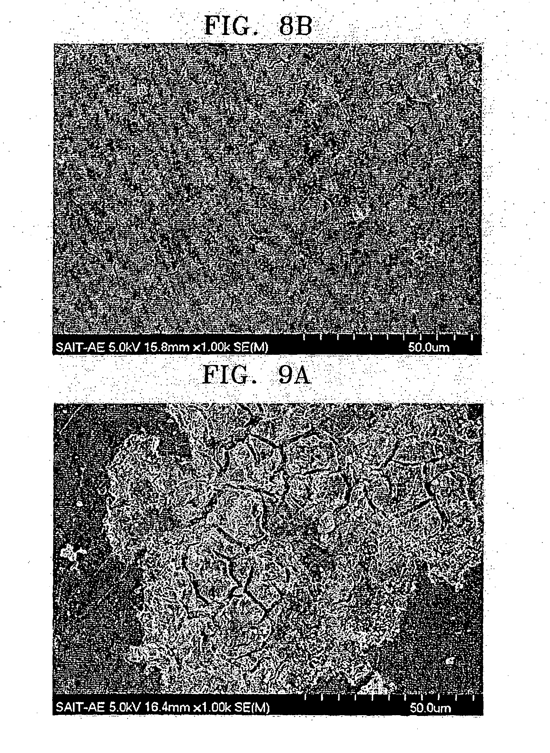

A 10-cycle charge/discharge test was conducted at 1C on the lithium batteries manufactured in Example 15 and 18. After this test, the pouch cell was deconstructed, and then the lithium metal electrodes were washed with tetrahydrofuran. The resulting electrodes were analyzed using an *in-situ* scanning electron microscope (SEM) at 1000x magnification. The results are shown in Figures 8A and 8B. Figure 8A illustrates the lithium battery manufactured in Example 18, and Figure 8B illustrates the lithium battery manufactured in Example 15.

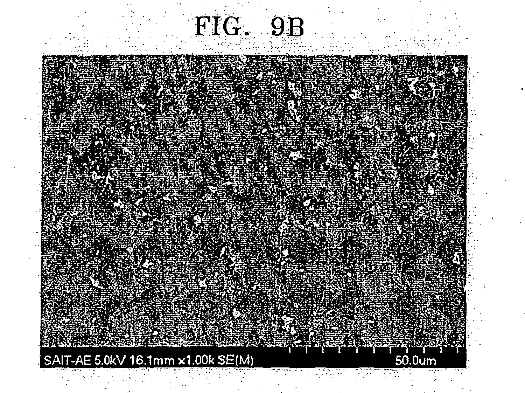

Referring to Figures 8A-8B, the lithium battery containing 1-iodobenzene had a lithium metal electrode with more uniform surface. In addition, the pouch cell was deconstructed after the lithium batteries manufactured in Example 15 and 18 were left sitting for 2 weeks, and then the lithium metal electrodes were washed with tetrahydrofuran (THF). The resulting lithium metal electrodes were analyzed using an *in-situ* scanning electron microscope (SEM) at 1,000x magnification. The results are shown in Figures 9A and 9B. Figures 9A and FIG. 9B correspond to Example 18 and Example 15, respectively. Referring to Figures 9A and 9B, the lithium battery containing 1-iodobenzene had a lithium metal electrode with a more uniform surface.

An organic electrolytic solution according to an embodiment of the present invention contains a halogenated benzene compound which reduces the reactivity of a lithium metal surface. In addition, the halogenated benzene has high polarity, and therefore lithium ions are less likely to bond with sulfide anions. Accordingly, the solubility of sulfide in an electrolyte may be increased, thereby improving the availability of sulfur, the charge/discharge efficiency characteristics of the battery, and the lifespan of the battery.

An organic electrolytic solution according to an embodiment of the present invention can be used in lithium sulfur batteries and all batteries including a lithium anode.

## Claims

1. A lithium sulfur battery comprising:
a cathode;
an anode composed of lithium metal;
a separator interposed between the cathode and the anode; and
an organic solvent containing polyglymes and dioxolanes in a ratio of 1:9 to 9:1 by volume; and
a halogenated benzene compound selected from 1-iodobenzene, 1-chlorobenzene, 1,2-diiodobenzene, 1,3-diiodobenzene, 1,4-diiodobenzene, 1,2,3-triiodobenzene, 1,2,4-triiodobenzene, 1-iodo-2-chlorobenzene, and 1-iodo-3 chlorobenzene.

2. The lithium sulfur battery of claim 1, wherein the halogenated benzene compound is present in an amount in the range of 0.1 parts to 1 parts by weight based on 100 parts by weight of the organic solvent.

3. The lithium sulfur battery of claim 1 or 2, wherein the polyglymes are one or more polyglyme selected from diethyleneglycol dimethylether, diethyleneglycol diethylether, triethyleneglycol dimethylether, and triethyleneglycol diethylether.

4. The lithium sulfur battery of any of claims 1-3, wherein the polyglymes are one or more polyglyme selected from diethyleneglycol dimethylether, diethyleneglycol diethylether, triethyleneglycol dimethylether, and triethyleneglycol diethylether.

5. The lithium sulfur battery of any of claims 1 to 4, wherein the dioxolanes are one or more dioxolane selected from 1,3-dioxolane, 4,5-diethyl-dioxolane, 4,5-dimethyl-dioxolane, 4-methyl-1,3-dioxolane, and 4-ethyl-1,3-dioxolane.

6. The lithium sulfur battery of any of claims 1 to 5, further comprising a compound selected from a carbonate-based solvent, sulfolane, dimethoxyethane, and diethoxyethane.

7. The lithium sulfur battery of any of claims 1 to 6, wherein the concentration of the lithium salt is in a range of 0.4M to 1.5 M.

8. The lithium sulfur battery of any of claims 1 to 7, wherein the cathode is composed of one or more compounds selected from simple substance sulfur, a catholyte in which Li₂Sₙ (1≤n≤12) is dissolved, organic sulfur, and (C₂Sₓ)_{y} (2.5≤x≤20 and 2≤y≤ 18).

## Patentansprüche

1. Lithium-Schwefel-Batterie, umfassend:
eine Kathode;
eine Anode, bestehend aus Lithiummetall;
ein Trennelement, das zwischen der Kathode und der Anode angeordnet ist, und
ein organisches Lösungsmittel, enthaltend Polyglyme und Dioxolane in einem Volumenverhältnis von 1:9 bis 9:1, und
eine halogenierte Benzolverbindung, ausgewählt aus 1-Iodbenzol, 1-Chlorbenzol, 1,2-Diiodbenzol, 1,3-Diiodbenzol, 1,4-Diiodbenzol, 1,2,3-Triiodbenzol, 1,2,4-Triiodbenzol, 1-Iod-2-chlorbenzol und 1-Iod-3-chlorbenzol.

2. Lithium-Schwefel-Batterie nach Anspruch 1, wobei die halogenierte Benzolverbindung in einer Menge im Bereich von 0,1 Gewichtsteile bis 1 Gewichtsteil, bezogen auf 100 Gewichtsteile des organischen Lösungsmittels, vorliegt.

3. Lithium-Schwefel-Batterie nach Anspruch 1 oder 2, wobei die Polyglyme ein Polyglym oder mehrere Polyglyme, ausgewählt aus Diethylenglykoldimethylether, Diethylenglykoldiethylether, Triethylenglykoldimethylether und Triethylenglykoldiethylether, sind.

4. Lithium-Schwefel-Batterie nach einem der Ansprüche 1 bis 3, wobei die Polyglyme ein Polyglym oder mehrere Polyglyme, ausgewählt aus Diethylenglykoldimethylether, Diethylenglykoldiethylether, Triethylenglykoldimethylether und Triethylenglykoldiethylether, sind.

5. Lithium-Schwefel-Batterie nach einem der Ansprüche 1 bis 4, wobei die Dioxolane ein Dioxolan oder mehrere Dioxolane, ausgewählt aus 1,3-Dioxolan, 4,5-Diethyldioxolan, 4,5-Dimethyldioxolan, 4-Methyl-1,3-dioxolan und 4-Ethyl-1,3-dioxolan, sind.

6. Lithium-Schwefel-Batterie nach einem der Ansprüche 1 bis 5, die außerdem eine Verbindung umfasst, die ausgewählt ist aus einem Lösungmittel auf Carbonatbasis, Sulfolan, Dimethoxyethan und Diethoxyethan.

7. Lithium-Schwefel-Batterie nach einem der Ansprüche 1 bis 6, wobei die Konzentration des Lithiumsalzes in einem Bereich von 0,4 M bis 1,5 M ist.

8. Lithium-Schwefel-Batterie nach einem der Ansprüche 1 bis 7, wobei die Kathode aus einer Verbindung oder mehreren Verbindungen, ausgewählt aus einfacher Schwefelsubstanz, einem Katholyten, in welchem Li₂Sₙ (1≤n≤12) gelöst ist, organischem Schwefel und (C₂Sₓ)_{y} (2,5≤x≤20 und 2≤y≤18), besteht.

## Revendications

1. Batterie au lithium-soufre comprenant :
une cathode ;
une anode composée de lithium métal ;
un séparateur interposé entre la cathode et l'anode ; et
un solvant organique contenant des polyglymes et des dioxolanes dans un rapport allant de 1/9 à 9/1 en volume ; et
un composé benzène halogéné choisi parmi le 1-iodobenzène, le 1-chlorobenzène, le 1,2-diiodobenzène, le 1,3-diiodobenzène, le 1,4-diiodobenzène, le 1,2,3-triiodobenzène, le 1,2,4-triiodobenzène, le 1-iodo-2-chlorobenzène et le 1-iodo-3-chlorobenzène.

2. Batterie au lithium-soufre selon la revendication 1, dans laquelle le composé benzène halogéné est présent dans une quantité allant de 0,1 partie en poids à 1 partie en poids par rapport à 100 parties en poids de solvant organique.

3. Batterie au lithium-soufre selon la revendication 1 ou 2, dans laquelle les polyglymes sont un ou plusieurs polyglymes choisis parmi l'éther diméthylique de diéthylène glycol, l'éther diéthylique de diéthylène glycol, l'éther diméthylique de triéthylène glycol et l'éther diéthylique de triéthylène glycol.

4. Batterie au lithium-soufre selon l'une quelconque des revendications 1 à 3, dans laquelle les polyglymes sont un ou plusieurs polyglymes choisi parmi l'éther diméthylique de diéthylène glycol, l'éther diéthylique de diéthylène glycol, l'éther diméthylique de triéthylène glycol et l'éther diéthylique de triéthylène glycol.

5. Batterie au lithium-soufre selon l'une quelconque des revendications 1 à 4, dans laquelle les dioxolanes sont un ou plusieurs dioxolanes choisis parmi le 1,3-dioxolane, le 4,5-diéthyl-dioxolane, le 4,5-diméthyl-dioxolane, le 4-méthyl-1,3-dioxolane et le 4-éthyl-1,3-dioxolane.

6. Batterie au lithium-soufre selon l'une quelconque des revendications 1 à 5, comprenant en outre un composé choisi parmi un solvant à base de carbonate, le sulfolane, le diméthoxyéthane et le diéthoxyéthane.

7. Batterie au lithium-soufre selon l'une quelconque des revendications 1 à 6, dans laquelle la concentration en sel de lithium se situe dans la plage allant de 0,4 M à 1,5 M.

8. Batterie au lithium-soufre selon l'une quelconque des revendications 1 à 7, dans laquelle la cathode se compose d'un ou plusieurs composés choisis parmi le soufre simple, un catholyte dans lequel est dissous du Li₂Sₙ (1 ≤ n ≤ 12), le soufre organique et (C₂Sx)_{y} (2, 5 ≤ x ≤ 20 et 2 ≤ y ≤ 18).
